# EUROPEAN PATENT APPLICATION

(11) **EP 1 780 973 A1**
(43) Date of publication of application: **02.05.2007**
(21) Application number: 05110167.3
(22) Date of filing: 28.10.2005
(51) Int. Cl.: H04L 29/06, H04M 7/00

(54) **Method and apparatus for session setup in dynamic networks**

(71) Applicant: NTT DoCoMo, Inc., Tokyo (JP)
(72) Inventor: Prehofer, Christian, 81477, Muenchen (DE); Mendes, Paulo, 81675, Muenchen (DE)
(74) Representative: Betten & Resch

(57) **Abstract**

A method for setting up a session having a defined quality of service between a first and a second end-host, said first end-host belonging to a first non-stationary network being able to move and to connect directly or through one or more intermediate networks to a first stationary access network, said second end-host being connected to a second stationary access network which can connect to said first stationary access network, said method comprising:
providing a quality of service controller in each stationary and non-stationary network, said quality of service controller being aware of the nodes of the network to which it belongs and their capabilities and being responsible for the allocation of resources necessary for a session;
providing a session initiation server in each stationary access network for initiating a session between hosts, whereas the session initiation server and the quality of service controller in a fixed stationary network both are aware of each other;
executing a discovery procedure to enable the first end-host to discover the session initiation server of the first stationary access network and to register therewith and for discovering the quality of service controller of the non-stationary network;
in response to a session initiation request received by the session initiation server of said first stationary access network, triggering the quality of service controller of said first stationary access network and triggering the quality of service controller of said first non-stationary network to allocate resources for said session in their respective networks.

## Description

### FIELD OF THE INVENTION

The present invention relates to the session set-up between devices in a dynamic network scenario in which one or more networks are not stationary and the session should have a defined quality of service.

### BACKGROUND OF THE INVENTION

Advanced networks nowadays may interconnect, whereas the interconnection may even involve the connection between different types of networks. Moreover, the connection between networks may be dynamic, i.e. a network may be not stationary (or fixed) but rather may dynamically move, like e.g. a network in a train, in a car, on a vessel, or the like.

In such an environment it is quite challenging to establish a communication's link between two devices belonging to different networks. Such a connection may involve even the connection through intermediate networks, and the individual networks of such a system may move so that the whole environment changes dynamically.

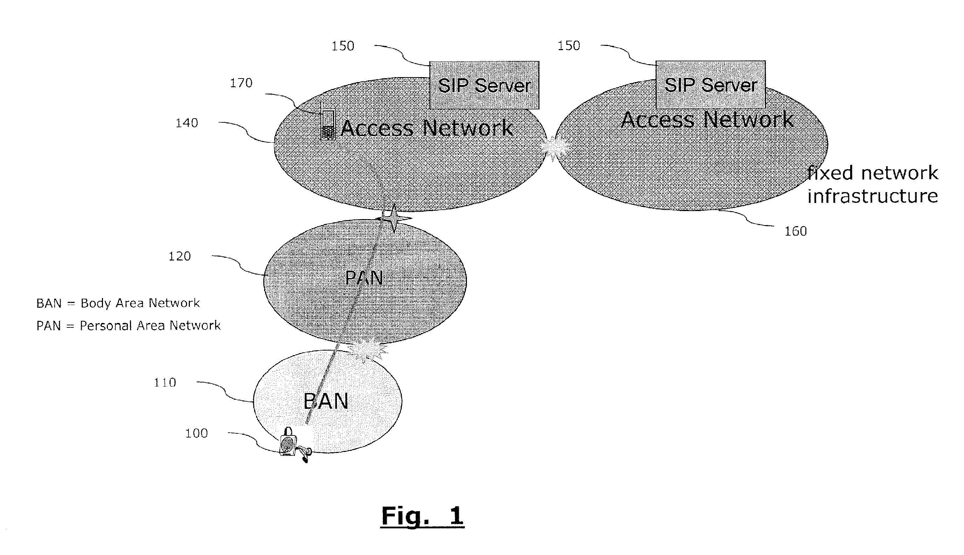

In Fig. 1 there is schematically illustrated such an environment of a dynamic network scenario. In this case there are two networks 140 and 160 which themselves are interconnected. E. g. they may be mobile networks of two different providers which are connected to each other such that the individual members of the two different networks can connect to each other. Although the elements of the networks 140 and 160 may be mobile devices, the two networks with respect to each other form a fixed network infrastructure in the sense that the networks themselves do not move (contrary to the mobile devices which are members of the network, which may well move). The connection between networks 140 and 160 may be established by any fixed wired connection, e.g. via a backbone network (not shown in Fig. 1).

Connected to this fixed or stationary (inter-)network infrastructure is a personal area network PAN 120 which may consist of several devices within the personal range of a user, such as a personal computer, a PDA, a printer, a mobile phone, etc. Connected to this personal area network PAN is a further network, a so-called body area network BAN 110.

A body area network BAN may consist of several network members which are directly or closely attached to the body of a user, such as sensors 100 which monitor vital signs data or medical data. The elements of a BAN are typically characterized by low transmission power and by an accumulating element which accumulates the data of the several other body area network elements and then transmits the thus accumulated data to a connected other network, such as the PAN in Fig. 1.

In such a dynamic network scenario through the connection between the PAN and the fixed network infrastructure the members of the BAN have access to mobile device 170 and transmit data thereto, whereas vice versa mobiledevice 170 may transmit data to members of the BAN and may control them via such a data path. The mobile device 170 in such a case may be a mobile phone, a smartphone, a PC, or anything alike. On the other hand the PAN and/or the BAN may be non-stationary networks, and it would therefore be desirable if a connection between an element of the PAN or BAN and mobile device could also be established when the BAN and the PAN connect to access network 160 instead of access network 140.

In order to establish a connection between two devices in such a network scenario a session has to be established. For this purpose fixed access networks may use a session initiation server SIP 150 as shown in Fig. 1, which carries out the session establishment. In addition to such a session establishment, however, the so-called "quality of service" (QoS) recently has become an issue in networking and inter-networking scenarios. The term "quality of service" (QoS) here stands for the capability to provide resource assurance and service differentiation in a network. Such a differentiation may involve the differentiation between different data rates (e.g. a "gold rate" and a "normal rate"), different reliabilities, different categories of services (voice communication, internet-radio, video-telephony, video-streaming, etc.). The control of quality of service may encompass parameters such as throughput, delay, and jitter of communications links.

There is a high demand nowadays for offering QoS differentiation in network services. Customers who pay differently should be able to get different kinds of services or different "quality of services". However, the current Internet provides only "best effort" services which means it does not guarantee timelines or actual delivery for a certain communications link. Modern applications, however, demand assured resources to provide a reliable delivery of the desired type of service, whereas different types of service may be differentiated. For that purpose it is essential not only to initiate a session but also to provide a quality of service management when initiating a session. This is particularly desirable in a network scenario as shown in Fig. 1, which involves non-stationary "moving" networks, like the PAN 120 and the BAN 100 in Fig. 1.

Known approaches to establish a QoS resource setup for a newly established communications link, however, only consider non-dynamic networks, i.e. a situation where the connection between networks is fixed. However, in future applications a connection involving non-stationary networks is getting more and more important. In view of the foregoing it is an object of the invention to provide a method and an apparatus for session establishment in a dynamic network scenario involving non-stationary networks and assuring a defined quality of service.

### SUMMARY OF THE INVENTION

According to one embodiment there is provided a method for setting up a session having a defined quality of service between a first and a second end-host, said first end-host belonging to a first non-stationary network being able to move and to connect directly or through one or more intermediate networks to a first stationary or non-stationary access network, said second end-host being connected to said first access network either directly or via one or more intermediate stationary or non-stationary networks, said method comprising:
providing a quality of service controller in a non-stationary network through which a connection should be established, said quality of service controller being aware of the nodes of the network to which it belongs and their capabilities and being responsible for ensuring the resources necessary for a session;
providing a session initiation server in said first access network for initiating a session between hosts;
executing a discovery procedure for discovering the quality of service controller of said non-stationary network by said first access network such that upon a request said quality of service controller can ensure the resources necessary for a session;
in response to a session initiation request received by the session initiation server of said first access network, triggering the quality of service controller of said non-stationary network to ensure resources for said session.

The discovery procedure of the quality of service controller by said first access network enables the request to ensure resources for the session. The resource allocation being in response to the session initiation request fits the resource allocation into existing session initiation procedures.

According to one embodiment said first access network is a stationary network has a quality of service controller; said first non-stationary network has a quality of service controller and said quality of service controller of said first access network and said session initiation server of said first access network are aware of each other; and said discovery procedure comprises:
discovering the quality of service controller of said first non-stationary network by said first stationary access network.

The provision of the QoS controller in the first access network and the session initiation server being aware of it enables the de-coupling of the session initiation part from the QoS reservation part by entrusting the QoS controller of the fixed access network in response to a session initiation request with ensuring the QoS resources, e.g. by contacting the QoS controllers of neighboring networks which have been discovered.

According to one embodiment the discovery procedure comprises:
discovering a cascading sequence of quality of service controller from said first stationary access network through intermediate stationary or non-stationary networks to said first non-stationary network; and
mapping of elements or adress spaces of elements of said first non-stationary network to said sequence of quality of service controllers.

This enables the handling of sessions where two networks are connected through intermediate networks. The cascading sequence of QoS controllers being respectively aware of each other, either directly or indirectly through the mapping and thereby being aware of the elements of the networks allows the QoS allocation in such cascaded network connections.

According to one embodiment said discovery procedure further comprises:
enabling said first end-host to discover the session initiation server of said first access network and to register therewith.

The discovery procedure enables the end-host to register with the session initiation server, and it further enables a communication between the quality of service controllers to ensure a resource allocation.
According to one embodiment the method further comprises: propagating announcement messages between quality of services controllers when a new non-stationary network is connecting to said first stationary access network or to another non-stationary network in order to enable said first end-host to register with said session initiation server of said first stationary access network; and after having allocated the resources for said session, forwarding said session initiation request from said session initiation server of said first stationary access network to said first end-host and initiating said session based on said allocated resources.

The propagation of announcement messages enables the session initiation server of a stationary access network to be aware of the quality of service controllers on the way to the first end-host. Moreover, it enables the first end-host to register with the first stationary access network, thereby enabling the session initiation request to be forwarded. Triggering the resources allocation by the reception of a session initiation request by the session initiation server through the quality of service controllers makes the quality of services and resources allocation independent of the session initiation. Moreover, it enables the actual forwarding of the session initiation request through the first end-host after having allocated to required resources.

According to one embodiment there exists a quality of service agreement between said first stationary and non-stationary network in advance of starting said session setup method.

The existence of a quality of service agreement between the first stationary and non-stationary networks avoids the need to negotiate a quality of service and allocate resources for each user connection between these two networks. This leaves the resource allocation as a task which consists only of the activation of such a pre-existing QoS agreement to ensure the required resources, thereby avoiding a time-consuming resource allocation and negotiation in the middle of the connection.

According to another embodiment other mechanisms than a pre-existing QoS agreement can be used by the QoS controllers to ensure the provision of the necessary resouces.

According to one embodiment the quality of service controller and the session initiation controller of said first stationary access network or aware of each other by pre-configuration or by a bootstrap register.
Pre-configuration or bootstrap registering are convenient to make the session initiation controller and the quality of service controller of a network aware of each other.

According to one embodiment said resource allocation by said quality of service controllers involves allocating the necessary resources within the network to which a quality of service controller belongs and allocating or negotiating the necessary resources for the connection between the network to which the quality of service controller belongs and it's neighboring network.

Allocating the resources within the network to which a quality of service controller belongs and to connection to its neighboring network ensures that the required quality of service is available for the session to be set up.

According to one embodiment if a quality of service agreement is in existence between two neighboring networks a quality of service controller in response to a resource allocation request instantly sends a positive reply in response to a resource allocation request.

An existing quality of service agreement avoids the need to negotiate such an agreement. This means that a request for resource allocation may just trigger a check whether such an agreement is in place, and if so, a positive reply may be sent thereby avoiding any time consuming allocation or negotiation.

According to one embodiment said announcement propagation comprises:
notifying the first end-host through the quality of service controller of said first stationary access network and said quality of service controller of said first non-stationary network about the session initiation server to enable said first end-host to register with said session initiation server so that said session initiation server is able to initiate a session with said first end-host.

Propagating the knowledge about the quality of service controllers of a respective network from the first stationary access network through any intermediate network up to the first non-stationary network to which the end-host belongs, is a convenient method of forwarding the knowledge about the respective quality of service controllers in the path between the stationary access network and the non-stationary access network.

According to one embodiment the propagation of announcement messages comprises:
accumulating a list of all quality of service controllers in the path from said first stationary access network to said first non-stationary network, and
sending said accumulated list of quality of services controllers from said first end-host to said session initiation server of said first stationary network when said first end-host registers with said session initiation server.

The accumulation of a list of quality of services controllers in the path from the first stationary access network to the first non-stationary access network and returning this list to the session initiation server during registration enables the session initiation server to directly contact each quality of service controller in the path which may be advantageous.

According to one embodiment said propagation of announcement messages comprises:
discovering the quality of service controller of said first non-stationary network by the quality of service controller of said first stationary access network during the connection between both networks; and
providing the information about the quality of service controller of said first non-stationary network discovered thereby to the session initiation server of said first stationary access network.

Discovering the quality of service controller of the first non-stationary network when it connects to the first stationary access network and forwarding this knowledge via the quality of service controller of the first stationary access network to the session initiation server is another way of distributing the knowledge about neighboring quality of service controllers through all connected networks.

According to one embodiment said session initiation request is a session invitation message of the session initiation protocol; and
said propagated announcement messages are router advertisement and/or router solicitation messages, e.g. of the IPv6 protocol.

Using the router advertisement and/or router solicitation messages of the IPv6 protocol for the propagated announcement messages enables the usage of existing IPv6 infrastructure for distributing the knowledge about quality of service controllers.

Moreover, using the session invitation message of the session initiation protocol as session initiation request makes it possible to use an existing infrastructure built upon the session invitation protocol.

According to one embodiment said are router advertisement and/or router solicitation messages carry information about the Quality of Service controllers and/or said session initiation server.

In this manner the information distribution about the QoS controllers and a SIP server can be executed using an existing infrastructure of e. g. IPv6.

According to one embodiment said router advertisement message carries as information the address of said session initiation server and the addresses of one or more quality of service controllers, and
said router solicitation message carries as information the address of a newly detected quality of service controller.

This makes use of these messages in a piggy-back manner to carry information which needs to be distributed to enable the forwarding of QoS requests, namely the addresses of QoS controllers which may e.g. be connected in a cascaded manner. Newly detected QoS controllers may automatically by this procedure get assigned an IP address and return it to the QoS controller from which the router advertisement came, thereby completing the information distribution about the QoS controllers which are connected in a cascaded manner.

According to one embodiment triggering of said resource allocation comprises:
forwarding a resource allocation request from the session initiation server of said first stationary network to the quality of service controller of said first stationary access network;
forwarding a resource allocation request from said quality of service controller of said first stationary access network to the quality of service controller of said first non-stationary network;
allocating the required resources by said quality of service controllers in the respective networks in response to said allocation requests;
returning a resource allocation acknowledgement message from the quality of service controller of said first non-stationary network to the quality of service controller of said first stationary access network after having allocated the required resources;
forwarding a resource allocation acknowledgement from said quality of service controller of said first stationary access network to the session initiation server of said first stationary access network.

The distinct flow of request and acknowledgement messages ensures that the required resources are allocated before a session invitation request is forwarded, thereby shortening the steps of the session initiation alone.

According to one embodiment said second end-host is connected to said first stationary network through a second stationary network, and said method further comprises:
after having allocated the required resources in said first stationary access network and said first non-stationary network:
   forwarding a resource reservation request from the session initiation server of said first stationary access network to the session initiation server of a second stationary access network through which said second end-host connects to said first stationary access network;
   forwarding a resource allocation request from the session initiation server of said second stationary access network to the quality of service controller of said second stationary access network; and
   after having allocated the required resources, returning a resource allocation acknowledgement from said quality of service controller of said second stationary network to the session initiation server of said second stationary access network.
The forwarding of the resource reservation request and the following resource allocation in the second stationary access network makes sure that also in the second stationary access network the required resources are available. Moreover, executing this procedure after the resources have been allocated in the first stationary access network and its neighboring networks on the path to the first end-host makes sure that exactly those resources are allocated in the second stationary access network which the first end-host actually is able to serve and to deliver.

According to one embodiment the method comprises:
in response to a session termination request sent from said first and end-host to the session initiation server of said first stationary access network:
   forwarding a resource allocation removal message from the session initiation server of said first stationary network to the quality of service controller of said stationary access network;
   forwarding a resource allocation removal message from said quality of service controller of said first stationary access network to the quality of service controller of said first non-stationary network;
   returning a resource removal acknowledgement from said quality of service controller of said first non-stationary network to the quality of service controller of said first stationary access network; and
   forwarding a resource removal acknowledgement message from the quality of service controller of said first stationary access network to the session initiation server of said first stationary access network;
   forwarding a session termination request from the session initiation server of said first stationary access network to the session initiation server of said second stationary access network;
   forwarding a resources removal request from the session initiation server of said second stationary access network to the quality of services controller of said second stationary access network;
   forwarding a resources removal acknowledge message from the quality of service controller of said second stationary access network to the session initiation server of said second stationary access network; and
   forwarding a session termination message from the session initiation server of said second stationary access network to said second end-host.

The removal procedure frees the resources which have been allocated for a certain session, thereby making them available for the next or another session to be established.

According to one embodiment the method comprises:
performing a resources allocation in the second stationary access network by the quality of service controller of said second stationary access network before forwarding a session initiation request from said second stationary access network to said first stationary access network.

Performing a resource allocation in the second stationary access network before forwarding a session initiation request to the first stationary access network may shorten the whole session initiation or session setup procedure. However, knowledge about the capability and the first end-host are necessary or recommended in order to avoid the allocation of resources which later than are either superfluous or insufficient.

According to one embodiment there is provided an apparatus for setting up a session having a defined quality of service between a first and a second end-host, said first end-host belonging to a first non-stationary network being able to move and to connect directly or through one or more intermediate networks to a first stationary access network, said second end-host being connected to said first stationary access network either directly or via one or more intermediate stationary or non-stationary networks, said apparatus comprising:
a quality of service controller in each stationary and non-stationary network through which a connection should be established, said quality of service controller being aware of the nodes of the network to which it belongs and their capabilities and being responsible for the allocation of resources necessary for a session;
a module for providing a session initiation server in each stationary access network for initiating a session between hosts, whereas the session initiation server and the quality of service controller in a fixed stationary network both are aware of each other;
a module for executing a discovery procedure to enable the first end-host to discover the session initiation server of the first stationary access network and to register therewith and further for discovering the quality of service controller of the non-stationary network;
a module for in response to a session initiation request received by the session initiation server of said first stationary access network, triggering the quality of service controller of said first stationary access network and triggering the quality of service controller of said first non-stationary network to allocate resources for said session.

According to a further embodiment there is provided an apparatus comprising one or more modules for carrying out methods according to embodiments of the invention.

According to a further embodiment there is provided a computer program comprising computer executable code for enabling a computer to carry out methods according to embodiments of the invention.

### BRIEF DESCRIPTION OF THE DRAWINGS

- Fig. 1: schematically illustrates a dynamic network scenario.
- Fig. 2: schematically illustrates a basic network infrastructure according to an embodiment of he invention.
- Fig. 3: schematically illustrates a procedure for discovering quality of service controllers of neighboring networks according to an embodiment of the invention.
- Fig. 4: schematically illustrates a session setup procedure according to an embodiment of the invention.
- Fig. 5: schematically illustrates a signal diagram according to a further embodiment of the invention.

### DETAILED DESCRIPTION

In the following description embodiments of the invention are described in connection with the accompanying drawings.

In the following description reference will often be made to "session initiation". Such a session initiation consists in the end-to-end exchange of messages between communication partners in order to establish a session. This can e.g. be achieved by the *Session Initiation Protocol* (SIP) a detailed description of which may be found in RFC 3261:"Session Initiation Protocol". In the following embodiments reference will mainly be made to SIP as a protocol for session initiation, however, other protocols, e.g. may be used as well for session initiation. Other examples could be the H.248 as defined by ITU-T and the Media Gateway Protocol (MEGACO) as defined by IETF.

The session initiation is used to set-up communication sessions among two end-hosts, and it uses a session initiation request (in the Terminology of SIP a "session invitation") sent from the device from which the communication originates to the destination device with which a session should be initiated. A return message from the destination indicates its availability, and an acknowledgement from the originator finalises the session establishment.

For the purposes of the session establishment according to SIP a network may be provided with a SIP server as shown in Fig. 1. The SIP server knows the members of the network to which it belongs, it knows e.g. their IP addresses, and thereby it is able to handle the signalling necessary to establish a session set-up between two (or more) network elements of the nework to which it belongs. Furthermore it is aware of other SIP servers of other networks to which it is directly or indirectly (e.g. via intermediate networks) connected. This enables it to establish a connection with elements of other networks through their respective SIP servers. "Fixed" or "stationary" networks, i.e. networks which do no move according to an embodiment of the invention are provided with a SIP server which knows the members of its network (their addresses) and the SIP servers of connected networks.

As mentioned, the session signalling provided by SIP is done end-to-end. However, it does not control the allocation of network resources and may even not follow the data path. Therefore in order to allocate the resources needed to ensure a desired QoS a separate and additional procedure is necessary which preferably fits into any existing session initiation protocol infrastructure as the one mentioned before.

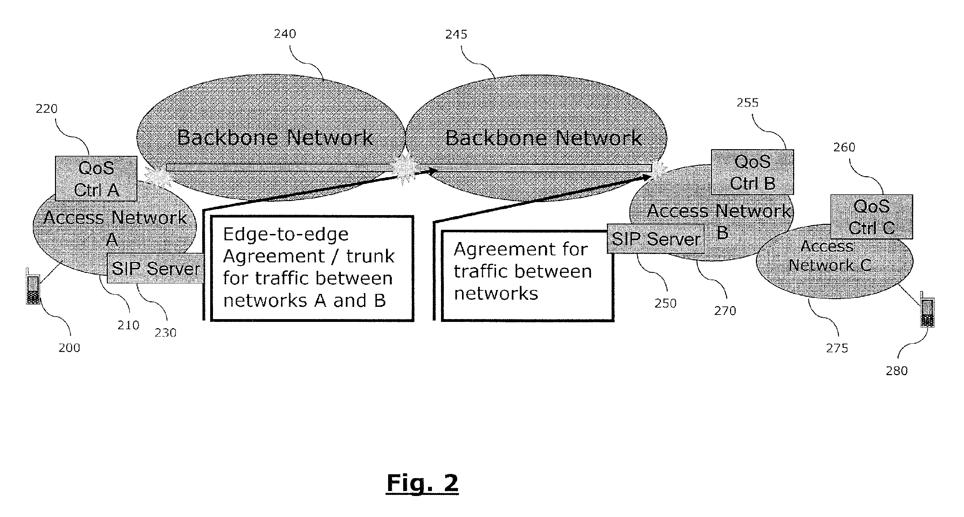

Fig. 2 illustrates a basic network infrastructure which according to one embodiment may be used to provide an assured QoS in a dynamic network environment such as the one shown in Fig. 1.

An end-host such as a mobile phone 280 may belong to a non-stationary (non-fixed or "mobile") network 275 which connects to fixed (stationary) access network B 270. Through this "access network" 270 any elements of non-fixed network may "access" further networks or their elements. In the example of Fig. 2 this may be done via backbone networks 245 and 240 to fixed access network A 210 to which the other communications endpoint, node 200 belongs.

The fixed access networks 210 and 270 have session initiation servers (SIP servers) 230 and 250. They are aware of the members of their respective networks, and they are capable to receive and forward the necessary signalling for initiating a session (without QoS assurance).

For ensuring a defined QoS there are provided Quality of Service Controllers QoS Ctrl in the stationary access networks 210 and 270 as well as in the moving non-stationary network 275.

When in the following Quality of Service Controllers (QoS controllers) are mentioned it is assumed that these devices or modules are aware of the elements of their own network and their respective adresses. It is further assumed that they are capable to ensure that necessry responses are provided for a certain communications link. Ensuring the required resources to provide a desired QoS may involve the mere activation of a Quality of Service agreement, it may involve the negotiation of a quality of services agreement, or it may make use of any mechanism to ensure the desired quality of Service, such as RSVP or MPLS. The QoS controller is able of ensuring the desired quality, e.g. on request by a user, by a communication partner or any element in the network.

In case of a cascaded connection between more than one networks a QoS controller may maintain a "mapping" of adresses or adress spaces of the elements of its neighbouring network or of even networks to which it is connected via intermediate networks. Through this mapping the QoS is able to respond appropriately to a QoS request for its own network or other networks (by referring to the mapping table) as will become more apparent from the description to follow.

In the backbone (or "core") networks 240 and 245 the QoS may in one embodiment be assured by an existing QoS agreement which takes care that the required quality of service for a certain connection is provided. Due to the typically very large traffic in such networks this can be achieved by statistical multiplexing of aggregated flow in the traffic. Therefore, as indicated in Fig. 2, there is an edge to edge QoS agreement for connections between networks 240 and 245 so that access networks 210 and 270 do not have to care about what happens between their edges where they are connected to backbone networks 240 and 245.

However, where there is no such predefined QoS agreement automatically in place, such as e.g. when a new inter-network connection is established by a moving network connecting to a stationary network, it is the task of the QoS controllers to take care of ensuring the QoS. In one embodiment this may involve the check whether for these two networks there is a QoS agreement which has already been negotiated (e.g. in advance by the operators), and if so this agreement needs just to be activated. E.g. there may be a QoS agreement which has at some time earlier been negotiated between the operators of access network B an moving network C, and if moving network C comes to connect with network B this QoS agreement may be activated by the QoS controllers as will be explained in somewhat more detail later. Then the QoS is ensured for inter-network connections between networks B and C.

Regarding the assurance of a defined QoS, one can distinguish between inter-network control and intra-network control. For the former one can use an approach like INQA (*Inter-Network QoS Agreements*) as described e. g. in TR IST-2002-507134-AN/INQA-Spec "Specification of INQA - dynamic control of Inter-Network QoS Agreements" which provides a dynamic control of QoS agreements between neighbour networks. These QoS agreements can then be used by an intra-domain QoS control approach to divide the available network resources between types of traffic, such as video, audio, and conversational. The intra-domain QoS control approaches can be e.g. based for instance on the DiffServ model a description of which can be found in RFC 2475: "An Architecture for Differentiated Services". An alternative could be to use reservation protocols such as RSVP which is e.g. described in RFC 2205: "Resource ReSerVation Protocol (RSVP)" or RSVP aggregated which is described in RFC 3175: "Aggregation of RSVP for IPv4 and IPv6 Reservations". To accommodate the control of inter- and intra-network resources there is provided a "QoS Controller" that can trigger the required inter-network and intra-network QoS signalling for those networks in which such a control is necessary. The QoS Controller has the task to ensure on request a defined QoS, and it may make use of an pre-existing QoS agreement which ensures a defined QoS between two networks, such as networks B and C in Fig. 2.

As can be seen from Fig. 2, the non-stationary networks are not provided with a SIP server. This means that on their own they are not able to initiate any sessions, and moreover the existing SIP servers are not "per se" aware of the nodes of non-stationary networks like network 275 in Fig. 2 because these non-stationary networks may move and therefore may connect to different stationary access networks over time.

In this type of dynamic scenario as shown in Fig. 2, if QoS should be ensured it is necessary to provide the co-operation between the session set-up control provided by SIP and the QoS control provided by the above mentioned "QoS Controller", specially in the case in which the wireless access network on the receiver size has a per-flow reservation approach (i.e. an assured QoS for each individual connection being requested). This leads to the following tasks which should be fulfilled by such a session set-ups:
1) End-hosts in dynamic networks (non-stationary networks) must find the local SIP server for registration (to be reachable).
2) QoS Controllers must be able to find their neighbours.
3) The SIP server must be able to trigger the correct configuration of QoS, in the access networks, for calls to end-hosts over multiple, dynamic networks (which are possibly moving).

Regarding the first point, as mentioned before non-stationary networks do not have a SIP server - these are located in fixed (stationary) networks which do not move. However, a moving end-host must still be able to find the appropriate SIP server in each fixed access network to be reachable for a session initiation. Thereby the end-host may be located inside a moving network, such as a e.g. a network in a train, which is itself connected to the fixed access network. Moreover, the SIP server in the fixed access network should be able to map logical service addresses, like a phone number or SIP identifier, to a location identifier for specific mobile networks.

According to one embodiment this can be achieved by a discovery procedure which enables a node of the non-stationary network to register with the SIP server of a stationary network to which the non-stationary network is connected.

Regarding the second point mentioned above, although all networks are assumed to have a "QoS Controller", networks may move, and therefore according to one embodiment a dynamic mechanism to allow "QoS controllers" to discover their neighbours is provided.

Regarding the third point mentioned above, according to one embodiment the QoS controller is able to allocate the necessary resources inside the network and in the connection to a neighbouring network (e.g. by activating a pre-existing QoS agreement between the two networks) in response to a session initiation request received by the SIP server of the network. According to one embodiment there exist QoS agreements between stationary access networks and backbone networks as shown in Fig. 2. This figure illustrates a situation in which there are three inter-network agreements (between networks 210 and 240, 240 and 245, and between networks 245 and 270), that when concatenated can provide QoS guarantees between users of both access networks A and B. Providing this means that network A can permit communication sessions going to any end-host in network B without asking the two backbone networks about available resources, which means that these agreements in advance may improve call set-up and simplify the network.

Providing QoS agreements only between fixed stationary networks is based on that advance reservations allocate network resources that may be wasted if they are not used. Hence, the establishment of QoS agreements in advance is in one embodiment used for aggregated traffic, i.e. on the backbone, since the "statistical multiplexing" of individual flows in the aggregated traffic ensures that the allocated resources are used on average (as said before, we are assuming that access network employ a per-flow reservation scheme, in fixed and wireless links). However bandwidth is quite expensive over wireless links and hence advance reservations for individual requests over such links are preferably not made (it is also problematic with power consumption and sleep mode/paging). Therefore, according to one embodiment a QoS agreement for a connection between a non-stationary network and a fixed access network is activated in a manner which is integrated into the SIP signalling, e.g. by activating a pre-existing QoS agreement between networks B and C in response to a session initiation request.

In the following there will be described in somewhat more detail an embodiment for session initiation with an assured QoS. It is based on using a discovery mechanism for the SIP server and then to integrate the QoS set-up in the access with SIP session signalling.

In the present embodiment there is assumed an end-to-end SIP session set-up, which is controlled via two SIP servers at both access networks A and C shown in Fig. 2

Also, in this embodiment there is a QoS controller for each network, including stationary networks A and B and moving network C, which take care of inter-network QoS agreements and of ensuring the local QoS inside a network, as explained above.

In this embodiment the SIP servers of the stationary access networks A 210 and B 270 are aware (by pre-configuration or bootstrap register) of the QoS controller in their respective access networks. These QoS controllers in one embodiment propagate announcement messages to nodes and to other networks when they connect to its network. E.g. in case of Fig. 2, QoS controller 255 triggered by SIP server 250 may propagate an announcement message to QoS controller 260 to inform it about the SIP server 250, whereas the QoS controller then may inform the nodes of its network about the SIP server. In a return message either sent directly back or via the QoS controller(s) on the way the SIP server may be informed about the nodes of the moving network and their addresses. In this way, the SIP server and the QoS controllers can establish a mapping from the service address to the IP address of a mobile node, and the mobile node of a non-stationary network can "discover" a SIP server and may then register therewith so that it can be reached by a session initiation request.

Furthermore, in order to actually provide the defined or desired QoS, the QoS controllers in access networks in one embodiment are triggered for each session set-up (e.g. by the SIP server after it has received a session initiation request) and will check the resources between the networks. This may include checking the resources for connections with two neighbouring networks, one in the direction towards the origination of the session initiation request and the other in the direction of the destination of the session initiation request. If QoS agreements between the networks are already in place or are pre-existing and just need to be activated the QoS controller can instantly send a positive reply, without asking the core networks to reserve per-flow resources. In this way, QoS is ensured and the call set-up time is improved because pre-established agreements can be used.

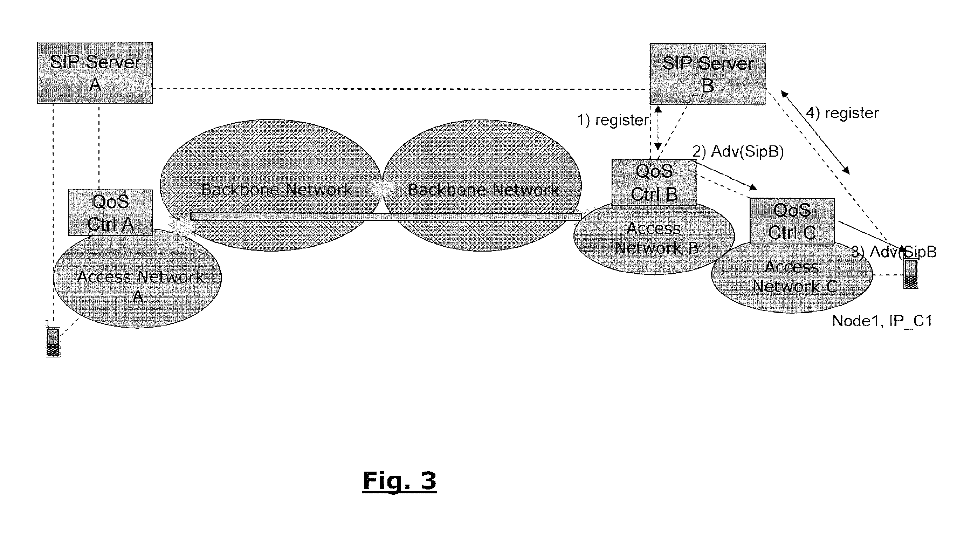

In the following the signal flow of a session set-up according to one embodiment will be described in somewhat more detail in connection with Fig. 3 in which the dashed lines represent the signalling.

Fig. 3 illustrates the first phase of the session set-up which includes the discovery of the SIP server by the mobile node Node1 of the non-stationary network C and the registration of the mobile node with the SIP server. It further includes the discovery of the neighbouring QoS controller of non-stationary network C by network B. In the embodiment shown in Fig. 3 the SIP server A belongs to the access network A, and the SIP server B belongs to the access network B. The access networks A and B in this example, like in case of Fig. 2, are fixed (stationary) networks, and network C in this example is a non-stationary ("moving") network the members of which at first have to be "discovered" by the SIP server of the network B. For that purpose there is carried out an advertisement (or "announcement messaging") as will be described below in the following steps:
1. QoS controller B registers with the SIP Server B, at bootstrap, and vice-versa. SIP Server B then knows about addresses reachable via Access Network B and can take registrations from network B. It should be noted that this step can also be done by static configuration.
2. QoS controller B advertises SIP Server B to QoS controller C of network C
3. QoS controller C advertises SIP Server B to node 1 in network C with address IP_C1
4. Node1 in network C can then register with SIP Server B using address IP_C1

The first 3 steps are needed to ensure that Node1 can contact the SIP server ("discovery" of the SIP server by Node1). This then enables Node1 to register with the SIP server so that it can be reached by SIP messages such as session initiation requests. If network A would also be a non-stationary network, a similar procedure would have to be carried out for access network A.

After the first 4 steps, the SIP server knows that node 1 can be reached via network B. This is possible because the address of IP_C1 is from the pool of addresses allocated for network B, in other words network C in terms of addresses is a subnet of network B. As Network C is attached via network B, addresses in C are part of B's addresses. Hence, by transitivity, address IP_C1 is part of network B.

In other words, QoS controller B (e.g. during initialisation) registers with the SIP Server B and SIP Server B then knows about addresses reachable via Access Network B. The QoS controller B then advertises SIP Server B to QoS controller C of network C. QoS controller C then advertises SIP Server B to Node1 in network C to enable Node1 to register with SIP server B. SIP server B then knows that node 1 can be reached via networks B and C and can then establish Address Mapping Node1 -> IP_C1. Node1 in network C can then register with SIP Server B using address IP_C1.

In this embodiment the discovery process uses advertisement messages triggered by the SIP server and passing from the QoS controller of the network where the SIP server is located through the QoS controller(s) of its neighbouring networks. It will be appreciated by skilled persons that the advertisement message may be propagated not only from network B to non-stationary network C but from there to a another non-stationary network (not shown) connected to network C, and from there to even further non-stationary networks. This means that in this embodiment the discovery process uses an advertisement message propagated from a QoS controller to the QoS controller of its neighbouring network, from there again to the QoS controller of its neighbouring network, and so on. This means that each QoS controller by way of the advertisement message gets informed about its neighbour until the information arrives at the destination node which then may register with the SIP server.

While in the foregoing embodiment only information about the respective neighbouring QoS controller is passed on through the advertisement message, the discovery and registration procedure according to a further embodiment may be carried out in a somewhat different manner which will be explained below.

In this embodiment the mechanism includes a discovery process, in which the list of QoS Controllers on the path (which here includes only QoS Ctrl C, but which in case of the example shown in Fig. 1 would include two QoS controller, one for the PAN and one for the BAN) is accumulated and this list is sent to the Node 1. This node then registers with the SIP Server, and provides the SIP Server the information about the accumulated list of QoS controllers. The SIP Server can then contact each QoS Controller individually when it has to set-up a reservation. However, since this approach required changes in the SIP register message (which must include information about all QoS controller in the path) as defined in the session invitation protocol, it may be less preferable.

Another approach or possibility to allow the SIP Server to know about all the QoS controllers in the way to each node is as follows: the QoS controller B discovers the QoS controller C during the connection between both networks, and provides that information to the local SIP Server B.

In any of the two latter variations described for the discovery and registration procedure before, the SIP server can request the resources directly from both QoS controllers, hence the QoS controllers do not need to communicate with each other for requesting resource allocation.

On the other hand, the first approach for the discovery procedure described before only requires the SIP Server to know about the QoS controller in its own network (the fixed access network). In this case, it is the QoS Controller B that knows about other controllers, like QoS controller C, and the SIP server only has to pass all the QoS requests to its local QoS controller.

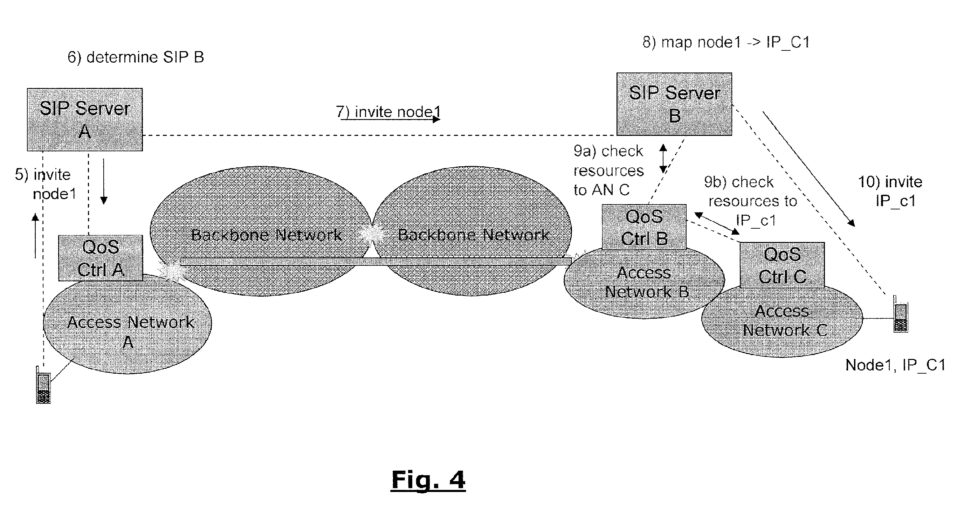

After the discovery and registration procedure which now has been explained in connection with Fig. 3, now in connection with Fig. 4 there will be explained the actual session initiation procedure according to one embodiment. This session initiation procedure may be carried out after the discovery and registration procedure according to one of the embodiments described before has been executed.

Figure 4 shows an embodiment of a SIP call set-up. It is assumed that the steps shown in Fig. 4 are executed after the steps 1) to 4) shown in Fig. 3 have been executed so that Node1 has registered already with SIP server B. The invitation message then in step 5) is sent in a normal manner from the requesting node in access network A to its SIP server A. SIP server A in step 6) determines that the message should be forwarded to SIP server B where it arrives as invitation message in step 7). In response to the arrival of the invitation message SIP server B identifies the QoS controller and asks for a check of resources or an existing QoS agreement, shown in Steps 9a and 9b. In step 9a) the SIP server checks the QoS controller of its own network and the connection to network C, in step 9b) the QoS controller C checks the resources to Node1 and possibly also the connection to network B in the backward direction. In case of a positive result the SIP server B is informed that the required resources are available. In operation 10 the invitation message then is forwarded to Node1. It should be mentioned here that the mapping of Node1 to address IP_C1 as shown in operation 8) in Fig. 4 may have been carried out already beforehand as a part of the discovery and registration procedure described before.

The resources check as shown in operations 9a) and 9b) can be done in parallel to the call set-up. According to one embodiment it should however be ensured that:
- call blocking is still possible (e.g. by not forwarding of the ok message as shown in an embodiment below)
- QoS resources are available when the data is sent (SIP data is only sent after another ack message, not shown in the figure 4)

In case there is no agreement between the networks, the QoS controller may be in charge of setting up the resources or refusing the call. If there is an existing QoS agreement between networks B and C the QoS controllers B and C may just activate this agreement. , and send a positive reply to the SIP server that the resources now are available. If the available resources of the agreement are insufficient, the call may be denied.

The procedure as described before has the following advantages:
- The discovery and co-ordination of the SIP server and the two QoS controller is achieved in order to permit call set-ups and control QoS for them.
- Due to the discovering process (which was executed beforehand in advance of the session initiation), a faster call set-up can be achieved.
- No extensions to the SIP protocol are needed. The SIP server can check resources locally (with the QoS controller of its own network, which then in turn contacts its neighbouring QoS controller), without talking to the other SIP server. In this embodiment it is assumed that each SIP server is checking resources locally for his side .

In the foregoing embodiment it was assumed that the SIP server B contacts the local QoS controller B which then in turn contacts QoS controller C to check the resources. However, if the discovery procedure has been carried out according to an embodiment in which an accumulated list of QoS controllers was sent from Node1 to SIP server B together with its registration request, the SIP server B may contact QoS controller C directly in operation 9b) and not via QoS controller B as shown in Fig. 4. As mentioned already, however, this would require a modification of the SIP protocol because the registration request message would need to carry additional information about QoS servers.

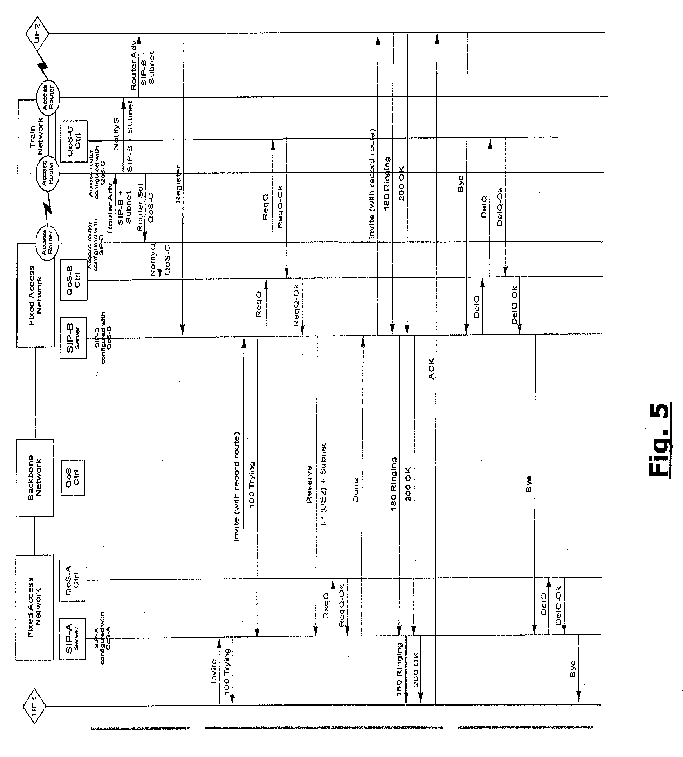

In the following there will be described in connection with Fig. 5 a further embodiment of the signalling for the session set-up in somewhat more detail.

The signalling in this embodiment is based on existing messages of the session invitation protocol such as "register", "invite", "trying", "ringing", "ok", and "bye". It further comprises existing messages of IPv6, namely Router Advertisement Router Adv and Router Solicitation Router Sol, which in this embodiment are made use of as advertisement messages to inform the QoS controllers about there neighbours and about the SIP server, as will be explained below.

In this detailed implementation there are used several additions compared to the previously described more simplified embodiment:
- It is assumed in this implementation that the QoS controller in access network B is pre-configured with a SIP-server B, and also that SIP-server B is configured with the information about the QoS-controller B. Hence the registration step for registering QoS controller B with SIP server B can be omitted.
- In this embodiment access routers (AR) in networks B and C are considered, which are involved in the local advertisement process.
- In this embodiment there is added an extra communication (reserve) message between the SIP servers in order to notify the SIP server A about the details of the called address. This is needed if SIP-server A cannot determine the detailed IP address (locator) of the callee, since that locator is needed to reserve resources in the access network A and in the backbone network (in the latter reserves may be set to the entire subnet in which the callee is connected).

The messages shown in Fig. 5 are divided in three groups. The first one (the "discovery phase") ends up with the registration of end-host UE2, the second group (the QoS set-up) starts with the invitation of user end-host UE1 until the acknowledgement message, and the third group (call termination) starts when UE2 disconnects the communication session.

In the first group of messages, the UE2 needs to know about the existence of the SIP-B server in order to make its registration. In this embodiment the discovery mechanism is based on existing IPv6 router advertisement (RouterAdv) and router solicitation (RouterSol) messages, and on two new messages: NotifyS and NotifyQ. A router advertisement message normally is used to distribute information about the subnet server by this router. An element which receives such a router advertisement message in Ipv6 then automatically create its own IP address, returns it to the router in a router solicitation message and thereby can be reached via this router.

In the present embodiment Router Adv and Router Sol are used for the purpose of the discovery process when a moving network such as train network shown in Fig. 5 connects to a stationary network like network B in Fig. 5. These messages are used to "piggy-back" additional information to be used for the discovery procedure, namely the messages NofiyS and NotifyQ. E. g. Router Adv sent from the access router at the edge of network B to the access router at the edge of network C may as NotifyS message contain information about SIP server B (e.g. its IP address) and possibly also about QoS controller B (e.g. its IP address). As a part of RouterAdv (/e.g. by using the extended header functionality) this message NotifyS is reaching the access router at the edge of rain network C. The message NotifyS then may be used between access routers of moving networks (here train network C) in order to distribute information about the SIP server in the current access network (here network B). For that purpose the access router at the edge of network C which received the RouterAdv message may broadcast this message to all other routers in the network C. Since the access router in network C which receives the router adv message is configured to know about its QoS controller as an element of the network the QoS controller C thereby also through the RouterAdv message gets informed about SIP server B. From the access router at the edge of network C to which UE to is connected the RouterAdv message then is forwarded to UE2 so that UE2 is informed about SIP server B.

In response to the Router Adv message there is returned a Router Solicitation message RouterSol which contains as a "piggy-back" message the -NotifyQ message. This NotifyQ message is used by the access router of the fixed access network in order to notify the local QoS controller about the IP address of the QoS controller of the connected moving network (network C in Fig. 5).

It is clear to the skilled person that additionally fields are needed in the IPv6 RouterAdv and RouterSol messages to transport the information related to the IP address of SIP servers and QoS Controllers (NotifyS and NotifyQ messages). For that purpose the extended header functionality can be used. The RouterAdv and RouterSol messages can then be used in a standard Ipv6 manner to distribute this information so that UE2 after this information has been distributor may register with SIP server B. It will be readily apparent to the skilled person that this scheme for discovery and registration may be applied in an analogous manner if the user-end host UE2 should connect to access network C via the train network and a further intermediate moving network not shown in Fig. 5.

The description given previously and as illustrated in Fig. 5 refers to the case in which it is the QoS controller in the fixed network that collects and keeps the information about the QoS controllers in the moving networks. In this case, the SIP-B only has to pass QoS requests to QoS-B. The implementation of the other two options described previously, in which it is the SIP server that communicates with any QoS controllers can be done as follows:
- Information QoS-B and QoS-C is accumulated in the mobile node: in this case the router Adv message is used to pass information about also about the QoS-B ctrl to the moving network. The AR in the moving network includes the address of QoS-B (collected from the route Adv message) and the IP address of QoS-C (pre-configured) in the NotifyS to the AR with the wireless link. The later router includes that information also in the router Adv sent to mobile nodes, which then pass the IP address of all discovered QoS controllers to the SIP server in the register message (which needs to be changed from the SIP specification).
- QoS-B ctrl discovers QoS-C ctrl (when the train network C connects to the fixed access network B) and passes that information to SIP-B: After receiving the Router Solicitation message from the AR in the moving network, as shown in Fig. 5, the AR in the fixed network sends a NotifyQ message with the IP address of QoS-C to SIP-B instead of to QoS-B, as shown in Fig. 5. SIP-B already knows the IP address of QoS-B by pre-configurations or bootstrap registration. Then SIP-B can communicate with QoS-B and QoS-C to request the allocation of resources.

In the second group of messages which relates to the QoS set-up phase after the discovery and registration phase, extra control messages are provided in this embodiment in order to control the QoS in access networks. This means the activation of the correct QoS agreements in the fixed access networks and between the fixed and non-stationary networks, and to reserve the required resources to UE1 and UE2. The mechanism of this embodiment allows resources to be allocated for the bi-directional communication between UE1 and UE2.

In Fig. 5, after the reception of the invite message from SIP-A server, the server SIP-B gets the IP address of UE2 from the registration information of that end-host, after which SIP-B triggers, by using the message ReqQ, the local QoS Controller with the IP address of UE2. The controller QoS-B can infer the QoS Controller of the moving network of UE2 (QoS-C), by comparing the IP address of UE2 with the IP address of the available QoS Controllers. Before triggering the QoS-C, QoS-B ensures the necessary resources, e.g. by activating the QoS agreement negotiated between the fixed access network and the train network, thereby ensuring that the QoS as required can be provided for the communication flow in the direction from the train network to the fixed access network. After receiving the message ReqQ from QoS-B, QoS-C alsoensures the necessary resources, e.g. by activating the QoS agreement between the train network and the fixed access network, however in the other direction, thereby ensuring the QoS in the direction from the fixed access network to the train network. Thereby QoS-C reserves resources for the flow between UE1 and UE2 for the uplink and downlink. In this embodiment it is assumed that there is an existing QoS agreement between the fixed access network B and the train network, and that this agreement differentiates between the flows in the two directions and must be activated separately. Therefore the QoS controllers QoS-B and QoS-C only can ensure the required resources by e.g. activating their respective part of the QoS agreement for which they are responsible and which governs the communication going in an inward direction. However, according to a further embodiment the QoS agreement between the train network and the fixed access network does not differentiate between directions, in this case the ReqQ message from QoS-B to QoS-C may activate the agreement (or ensure the required resources) into both directions.

As mentioned already earlier activating a QoS agreement is only an exemplary embodiment of how the QoS controller ensures that the necessary resources are provided, and other ways of ensuring the desired QoS are also possible.

After the allocation of resources in the edge networks near UE2, SIP-B sends a message Reserve to SIP-A with the IP address of UE2 and the subnet address of the fixed access network near UE2 (this is possible since the "record route" was used in the Invite message so that the route can be tracked back). SIP-A then triggers the local QoS controller, by using a message ReqQ, and QoS-A checks the existence of a QoS agreement to and from the subnet indicated by SIP-B. Moreover, QoS-A reserves resources for the flow between UE1 and UE2 (for the uplink and downlink). After being notified by SIP-A, by means of a Done message, that resources are reserved in the edge near UE1, SIP-B will resume the normal behaviour of SIP.

In the third group of messages which concerns the termination of a session, new messages called DeIQ and DeIQ-ok are defined to allow the QoS controllers near the end-hosts to remove the network resources allocated for the flow between U1 and U2 for the uplink and downlink. The QoS agreements between networks do not have to be removed, since according to one embodiment the QoS controllers will deactivate them automatically at the end of each defined active period.

In the following an embodiment which is directed to a modification of the QoS set-up procedure will be described. Alternatively to what was described in the above embodiment, SIP servers may directly contact the QoS controllers on the path to the node (QoS-B and QoS-C) in the second group of messages (the QoS set-up). After receiving an Invite message from SIP-A, SIP-B will send a ReqQ message to the local QoS controller (QoS-B) and to the QoS controller in the moving network(QoS-C), and not only to the local QoS controller as described before.

A second option which corresponds more closely to the version presented in the above section, is to omit the communication between SIP-B and SIP-A regarding the Reserve and Done messages. Instead, the SIP-A has to ensure resources on the path to the destination (for his part in network A and possibly the backbone). (For this, SIP-A has to have sufficient information about the destination). This can e.g. be done before the invite message with the ReqQ and ReqQ-OK messages. The advantage of this variation is faster call set-up due to fewer messages between the SIP servers, which may be far away.

The above co-ordination between QoS controllers and the SIP server can also be used for call tear-down as shown in the figure above (ReqQ messages).

Further extensions for mobility can be considered. Here the problem is to detect changes in the network connectivity, e.g. by the access routers and to update the co-ordination between the QoS controllers, e.g. if network C moves and attaches to another network. In such a case the whole procedure as explained in connection with the previous embodiments is to be carried out again, i.e. the discovery and registration procedure and the registration procedure. It will be apparent to the skilled person that in addition to this the SIP server SIP-A should be notified about the stationary network to which the moving network has newly connected order to adapt the resources via the controllers or to tear down the call. There exist solutions about the mobility on the SIP level which may be referred to in this regard. Regarding the discovery and registration at the newly connected fixed access network there will be required extra discovery / notification messages between QoS controllers and SIP server in a similar way as shown above.

It will further be appreciated that the embodiments of the invention as described before may also be implemented in connection with networks (stationary or non-stationary) having no quality of service controllers and acting as networks where said end-hosts are located or as intermediate networks. This is possible if these networks have sufficient resources so that independent of a QoS controller the required resources may be provided.

Moreover, it will be appreciated by the skilled person that while the invention has been described in the foregoing in connection with "non-stationary" of "mobile" networks, it will be understood by the skilled person that the principles of the invention can as well be applied to networks which do not move but are just not "fixed" in the sense that they may loose connection due to one or the other reason, e.g. because they are moving, due to connectivity problems, because they are switched off or reboot, or anything alike. In these cases a "new" connection has to be established since the previous one was not "fixed", and in these circumstances the embodiments of the invention may be used for providing a session with defined quality of service. The term "non-stationary" therefore should be understood such that it can also be interpreted in the sense of "not-fixed" which means that the connection between the non-stationary network and the network to which it connects is to be newly established. This may also happen during the setup of a "fixed" network connection which after it it has been established from then on is "fixed" but which has bnot been "fixed" before.

The skilled person will understand that the embodiments and their components, processes or modules as described hereinbefore may be implemented by hardware or by software or a combination of them. It will be understood that the QoS controller and the SIP server belonging to the same network may be implemented as separate devices or may be implemented as a single device or apparatus, or as modules operating on the same physical machine. In particular, modules operating to execute procedural operations as explained in connection with the previous description may be implemented by one or more computer programs running on a computer or any computing device such as a mobile phone, a smartphone, a standalone PC, a PDA, a router or a switch in a network or the like.

## Claims

1. A method for setting up a session having a defined quality of service between a first and a second end-host, said first end-host belonging to a first non-stationary or non-fixed network being able to connect directly or through one or more intermediate networks to a first stationary or non-stationary access network, said second end-host being connected to said first access network either directly or via one or more intermediate stationary or non-stationary networks, said method comprising:
providing a quality of service controller in a non-stationary network through which a connection should be established, said quality of service controller being aware of the nodes of the network to which it belongs and their capabilities and being responsible for ensuring the resources necessary for a session;
providing a session initiation server in said first access network for initiating a session between hosts, executing a discovery procedure for discovering the quality of service controller of said non-stationary network; by said first access network such that upon a request said quality of service controller can ensure the resources necessary for a session;
in response to a session initiation request received by the session initiation server of said first network, triggering the quality of service controller of said non-stationary network to ensure resources for said session.

2. The method of claim 1, wherein
said first access network is a stationary network has a quality of service controller;
said first non-stationary network has a quality of service controller and said quality of service controller of said first access network and said session initiation server of said first access network are aware of each other;
said discovery procedure comprises:
discovering the quality of service controller of said first non-stationary network by said first stationary access network.

3. The method of claim 1 or 2, wherein said discovery procedure comprises:
discovering a cascading sequence of quality of service controller from said first stationary access network through intermediate stationary or non-stationary networks to said first non-stationary network; and
mapping of elements or adress spaces of elements of said first non-stationary network to said sequence of quality of service controllers.

4. The method of one of the preceding claims, wherein said discovery procedure further comprises:
enabling said first end-host to discover the session initiation server of said first access network and to register therewith.

5. The method of one of the preceding claims, further comprising:
propagating announcement messages between quality of services controllers when a new non-stationary network is connecting to said first stationary access network or to another non-stationary network in order to enable said first end-host to register with said session initiation server of said first stationary access network; and
after having allocated the resources for said session, forwarding said session initiation request from said session initiation server of said first stationary access network to said first end-host and initiating said session based on said allocated resources.

6. The method of one of claims 1 to 5, wherein there exists a quality of service agreement between said first stationary and non-stationary network in advance of starting said session setup method.

7. The method of one of claims 1 to 6 wherein the quality of service controller and the session initiation controller of said first stationary access network or aware of each other by pre-configuration or by a bootstrap register.

8. The method of one of claims 1 to 7, wherein said resource allocation by said quality of service controllers involves allocating the necessary resources within the network to which a quality of service controller belongs and allocating or negotiating the necessary resources for the connection between the network to which the quality of service controller belongs and its neighboring network.

9. The method of one of the preceding claims, wherein
if a quality of service agreement is in existence between two neighboring networks a quality of service controller in response to a resource allocation request instantly sends a positive reply in response to a resource allocation request.

10. The method of one of claims 1 to 9 wherein said announcement propagation comprises:
notifying the first end-host through the quality of service controller of said first stationary access network and said quality of service controller of said first non-stationary network about the session initiation server to enable said first end-host to register with said session initiation server so that said session initiation server is able to initiate a session with said first end-host.

11. The method of one of claims 1 to 10 wherein said propagation of announcement messages comprises:
accumulating a list of all quality of service controllers in the path from said first stationary access network to said first non-stationary network, and
sending said accumulated list of quality of services controllers from said first end-host to said session initiation server of said first stationary network when said first end-host registers with said session initiation server.

12. The method of one of claims 1 to 11 wherein said propagation of announcement messages comprises:
discovering the quality of service controller of said first non-stationary network by the quality of service controller of said first stationary access network during the connection between both networks; and
providing the information about the quality of service controller of said first non-stationary network discovered thereby to the session initiation server of said first stationary access network.

13. The method of one of claims 1 to 12, wherein
said session initiation request is a session invitation message of the session initiation protocol; and
said propagated announcement messages are router advertisement and/or router solicitation messages.

14. The method of one of claims 1 to 13, wherein
said are router advertisement and/or router solicitation messages carry information about the Quality of Service controllers and/or said session initiation server.

15. The method of one of claims 13 or 14, wherein
said router advertisement message carries as information the address of said session initiation server and the addresses of one or more quality of service controllers, and
said router solicitation message carries as information the address of a newly detected quality of service controller.

16. The method of one of claims 1 to 15, wherein said triggering of said resource allocation comprises:
forwarding a resource allocation request from the session initiation server of said first stationary network to the quality of service controller of said first stationary access network;
forwarding a resource allocation request from said quality of service controller of said first stationary access network to the quality of service controller of said first non-stationary network;
allocating the required resources by said quality of service controllers in the respective networks in response to said allocation requests;
returning a resource allocation acknowledgement message from the quality of service controller of said first non-stationary network to the quality of service controller of said first stationary access network after having allocated the required resources;
forwarding a resource allocation acknowledgement from said quality of service controller of said first stationary access network to the session initiation server of said first stationary access network.

17. The method of one of claims 1 to 16, wherein said second end-host is connected to said first stationary network through a second stationary network, said method further comprising:
after having allocated the required resources in said first stationary access network and said first non-stationary network:
forwarding a resource reservation request from the session initiation server of said first stationary access network to the session initiation server of a second stationary access network through which said second end-host connects to said first stationary access network;
forwarding a resource allocation request from the session initiation server of said second stationary access network to the quality of service controller of said second stationary access network; and
after having allocated the required resources, returning a resource allocation acknowledgement from said quality of service controller of said second stationary network to the session initiation server of said second stationary access network.

18. The method of one of the preceding claims, further comprising:
in response to a session termination request sent from said first and end-host to the session initiation server of said first stationary access network:
forwarding a resource allocation removal message from the session initiation server of said first stationary network to the quality of service controller of said stationary access network;
forwarding a resource allocation removal message from said quality of service controller of said first stationary access network to the quality of service controller of said first non-stationary network;
returning a resource removal acknowledgement from said quality of service controller of said first non-stationary network to the quality of service controller of said first stationary access network; and
forwarding a resource removal acknowledgement message from the quality of service controller of said first stationary access network to the session initiation server of said first stationary access network;
forwarding a session termination request from the session initiation server of said first stationary access network to the session initiation server of said second stationary access network;
forwarding a resources removal request from the session initiation server of said second stationary access network to the quality of services controller of said second stationary access network;
forwarding a resources removal acknowledge message from the quality of service controller of said second stationary access network to the session initiation server of said second stationary access network; and
forwarding a session termination message from the session initiation server of said second stationary access network to said second end-host.

19. The method of one of claims 1 to 18, comprising:
performing a resources allocation in the second stationary access network by the quality of service controller of said second stationary access network before forwarding a session initiation request from said second stationary access network to said first stationary access network.

20. An apparatus for setting up a session having a defined quality of service between a first and a second end-host, said first end-host belonging to a first non-stationary network being able to move and to connect directly or through one or more intermediate networks to a first stationary access network, said second end-host being connected to said first stationary access network either directly or via one or more intermediate stationary or non-stationary networks, said apparatus comprising:
a quality of service controller in each stationary and non-stationary network through which a connection should be established, said quality of service controller being aware of the nodes of the network to which it belongs and their capabilities and being responsible for the allocation of resources necessary for a session;
a module for providing a session initiation server in each stationary access network for initiating a session between hosts, whereas the session initiation server and the quality of service controller in a fixed stationary network both are aware of each other;
a module for executing a discovery procedure to enable the first end-host to discover the session initiation server of the first stationary access network and to register therewith and further for discovering the quality of service controller of the non-stationary network;
a module for in response to a session initiation request received by the session initiation server of said first stationary access network, triggering the quality of service controller of said first stationary access network and triggering the quality of service controller of said first non-stationary network to allocate resources for said session.

21. An apparatus according to claim 20, further comprising:
a module or modules for carrying out a method according to one of claims 1 to 19.

## Amended claims

### Amended claims in accordance with Rule 86(2) EPC.

**1.** A method for setting up a session having a defined quality of service between a first and a second end-host, said first end-host belonging to a first non-stationary or non-fixed network which can move and is able to connect directly or through one or more intermediate networks to a first stationary access network, said first stationary access network having a quality of service controller, said second end-host being connected to said first access network either directly or via one or more intermediate stationary or non-stationary networks, said method comprising:
providing a quality of service controller in a non-stationary network through which a connection should be established, said quality of service controller being aware of the nodes of the network to which it belongs and their capabilities and being responsible for ensuring the resources necessary for a session;
providing a session initiation server in said first access network for initiating a session between hosts;
executing a discovery procedure in advance of a session initiation for discovering the quality of service controller of said non-stationary network by said first access network such that upon a request said quality of service controller can ensure the resources necessary for a session;
in response to a session initiation request received by the session initiation server of said first network, triggering the quality of service controller of said non-stationary network to ensure resources for said session, said method further comprising:
propagating announcement messages between quality of services controllers when a new non-stationary network is connecting to said first stationary access network or to another non-stationary network in order to enable said first end-host to register with said session initiation server of said first stationary access network, wherein
said propagated announcement messages are router advertisement and/or router solicitation messages.

**2.** The method of claim 1, wherein
said first access network is a stationary network has a quality of service controller;
said first non-stationary network has a quality of service controller and said quality of service controller of said first access network and said session initiation server of said first access network are aware of each other;
said discovery procedure comprises:
discovering the quality of service controller of said first non-stationary network by said first stationary access network.

**3.** The method of claim 1 or 2, wherein said discovery procedure comprises:
discovering a cascading sequence of quality of service controller from said first stationary access network through intermediate stationary or non-stationary networks to said first non-stationary network; and
mapping of elements or adress spaces of elements of said first non-stationary network to said sequence of quality of service controllers.

**4.** The method of one of the preceding claims, wherein said discovery procedure further comprises:
enabling said first end-host to discover the session initiation server of said first access network and to register therewith.

**5.** The method of one of the preceding claims, further comprising:
after having allocated the resources for said session, forwarding said session initiation request from said session initiation server of said first stationary access network to said first end-host and initiating said session based on said allocated resources.

**6.** The method of one of claims 1 to 5, wherein there exists a quality of service agreement between said first stationary and non-stationary network in advance of starting said session setup method.

**7.** The method of one of claims 1 to 6 wherein the quality of service controller and the session initiation controller of said first stationary access network or aware of each other by pre-configuration or by a bootstrap register.

**8.** The method of one of claims 1 to 7, wherein said resource allocation by said quality of service controllers involves allocating the necessary resources within the network to which a quality of service controller belongs and allocating or negotiating the necessary resources for the connection between the network to which the quality of service controller belongs and its neighboring network.

**9.** The method of one of the preceding claims, wherein
if a quality of service agreement is in existence between two neighboring networks a quality of service controller in response to a resource allocation request instantly sends a positive reply in response to a resource allocation request.

**10.** The method of one of claims 1 to 9 wherein said announcement propagation comprises:
notifying the first end-host through the quality of service controller of said first stationary access network and said quality of service controller of said first non-stationary network about the session initiation server to enable said first end-host to register with said session initiation server so that said session initiation server is able to initiate a session with said first end-host.

**11.** The method of one of claims 1 to 10 wherein said propagation of announcement messages comprises:
accumulating a list of all quality of service controllers in the path from said first stationary access network to said first non-stationary network, and
sending said accumulated list of quality of services controllers from said first end-host to said session initiation server of said first stationary network when said first end-host registers with said session initiation server.

**12.** The method of one of claims 1 to 11 wherein said propagation of announcement messages comprises:
discovering the quality of service controller of said first non-stationary network by the quality of service controller of said first stationary access network during the connection between both networks; and
providing the information about the quality of service controller of said first non-stationary network discovered thereby to the session initiation server of said first stationary access network.

**13.** The method of one of claims 1 to 12, wherein
said session initiation request is a session invitation message of the session initiation protocol; and

**14.** The method of one of claims 1 to 13, wherein
said are router advertisement and/or router solicitation messages carry information about the Quality of Service controllers and/or said session initiation server.

**15.** The method of one of claims 13 or 14, wherein
said router advertisement message carries as information the address of said session initiation server and the addresses of one or more quality of service controllers, and
said router solicitation message carries as information the address of a newly detected quality of service controller.

**16.** The method of one of claims 1 to 15, wherein said triggering of said resource allocation comprises:
forwarding a resource allocation request from the session initiation server of said first stationary network to the quality of service controller of said first stationary access network;
forwarding a resource allocation request from said quality of service controller of said first stationary access network to the quality of service controller of said first non-stationary network;
allocating the required resources by said quality of service controllers in the respective networks in response to said allocation requests;
returning a resource allocation acknowledgement message from the quality of service controller of said first non-stationary network to the quality of service controller of said first stationary access network after having allocated the required resources;
forwarding a resource allocation acknowledgement from said quality of service controller of said first stationary access network to the session initiation server of said first stationary access network.

**17.** The method of one of claims 1 to 16, wherein said second end-host is connected to said first stationary network through a second stationary network, said method further comprising:
after having allocated the required resources in said first stationary access network and said first non-stationary network:
forwarding a resource reservation request from the session initiation server of said first stationary access network to the session initiation server of a second stationary access network through which said second end-host connects to said first stationary access network;
forwarding a resource allocation request from the session initiation server of said second stationary access network to the quality of service controller of said second stationary access network; and
after having allocated the required resources, returning a resource allocation acknowledgement from said quality of service controller of said second stationary network to the session initiation server of said second stationary access network.

**18.** The method of one of the preceding claims, further comprising:
in response to a session termination request sent from said first and end-host to the session initiation server of said first stationary access network:
forwarding a resource allocation removal message from the session initiation server of said first stationary network to the quality of service controller of said stationary access network;
forwarding a resource allocation removal message from said quality of service controller of said first stationary access network to the quality of service controller of said first non-stationary network;
returning a resource removal acknowledgement from said quality of service controller of said first non-stationary network to the quality of service controller of said first stationary access network; and
forwarding a resource removal acknowledgement message from the quality of service controller of said first stationary access network to the session initiation server of said first stationary access network;
forwarding a session termination request from the session initiation server of said first stationary access network to the session initiation server of said second stationary access network;
forwarding a resources removal request from the session initiation server of said second stationary access network to the quality of services controller of said second stationary access network;
forwarding a resources removal acknowledge message from the quality of service controller of said second stationary access network to the session initiation server of said second stationary access network; and
forwarding a session termination message from the session initiation server of said second stationary access network to said second end-host.

**19.** The method of one of claims 1 to 18, comprising:
performing a resources allocation in the second stationary access network by the quality of service controller of said second stationary access network before forwarding a session initiation request from said second stationary access network to said first stationary access network.

**20.** An apparatus for setting up a session having a defined quality of service between a first and a second end-host, said first end-host belonging to a first non-stationary network which can move and is able to move and to connect directly or through one or more intermediate networks to a first stationary access network, said first stationary access network having a quality of service controller, said second end-host being connected to said first stationary access network either directly or via one or more intermediate stationary or non-stationary networks, said apparatus comprising:
a quality of service controller in each stationary and non-stationary network through which a connection should be established, said quality of service controller being aware of the nodes of the network to which it belongs and their capabilities and being responsible for the allocation of resources necessary for a session;
a module for providing a session initiation server in each stationary access network for initiating a session between hosts, whereas the session initiation server and the quality of service controller in a fixed stationary network both are aware of each other;
a module for executing in advance of a session initiation a discovery procedure to enable the first end-host to discover the session initiation server of the first stationary access network and to register therewith and further for discovering the quality of service controller of the non-stationary network;
a module for in response to a session initiation request received by the session initiation server of said first stationary access network, triggering the quality of service controller of said first stationary access network and triggering the quality of service controller of said first non-stationary network to allocate resources for said session said apparatus further comprising:
a module for propagating announcement messages between quality of services controllers when a new non-stationary network is connecting to said first stationary access network or to another non-stationary network in order to enable said first end-host to register with said session initiation server of said first stationary access network, wherein
said propagated announcement messages are router advertisement and/or router solicitation messages.

**21.** An apparatus according to claim 20, further comprising:
a module or modules for carrying out a method according to one of claims 1 to 19.
